# EUROPEAN PATENT APPLICATION

(11) **EP 2 602 770 A1**
(43) Date of publication of application: **12.06.2013**
(21) Application number: 11814856.8
(22) Date of filing: 03.03.2011
(51) Int. Cl.: G07D 7/12, B42D 15/10, B32B 38/00

(54) **IDENTIFICATION DOCUMENT**

(30) Priority: 04.08.2010 RU 2010132699
(71) Applicant: Federalnoe Gosudarstvennoe Unitarnoe Predpriyatie "Goznak" (FGUP "Goznak"), St.Petersburg 197046 (RU)
(72) Inventor: TRACHUK, Arkadiy Vladimirovich, St.Petersburg, 199004 (RU); CHEGLAKOV, Andrey Valerievich, Moscow 119034 (RU); KURYATNIKOV, Andrey Borisovich, Moscow, 129128 (RU); PISAREV, Alexandr Georgievich, Moscow 115551 (RU); XENOFONTOV, Valentin Anatolievich, Moscow 115372 (RU); SHIRYAEVSKAYA, Inna Alexeevna, Moscow 121165 (RU); FEDOROVA, Elena Mikhailovna, Moscow, 115093 (RU); TURKINA, Elena Samuilovna, Moscow 119454 (RU); KORUNKOVA, Olga Vyacheslavovna, Moscow 111395 (RU)
(74) Representative: Tischner, Oliver
(86) International application number: PCT/RU2011/000136
(87) International publication number: WO 2012/018279

(57) **Abstract**

The invention relates to special purpose printed materials. The identification document comprises a cover made from a bookbinding material, paper sheets and a multi-layered information page. The owner's personal data and a machine-readable line are applied to one side of the information page by a laser engraving method. A laser perforation of an individual number is made in the paper sheets of the document and in the cover. A multi-layer security element, comprising a polymer, highly reflective, metallized film, on which variable identification information is applied, is introduced onto the sealed surface of at least one internal layer of the identification page under an external transparent polymer layer, and a transparent foil with holographic images is applied to the external surface of the information page on at least one side thereof.

## Description

### Field of the Invention

The invention relates to multilayer printed materials for special purposes and can be used in the manufacture of passports, identity cards and other identification documents.

### Background Art

A passport comprises an information page with identification information and the passport owner's photograph, wherein the information page is made of a plastic, such as polycarbonate, personalized by laser recording of information. The information page is made of multiple layers which are joined together by a laminating method using heating and pressure, and a separation layer is provided in the binding area of the information page to prevent the connection of layers in course of lamination (RU 99108732, 27.02.2001).

Another passport comprises a page with identification information and the passport owner's photograph. The information page consists of a plastic such as polycarbonate, which is personalized by records made with a laser beam (EP 936 976, 25.08.1999).

The most relevant prior art is a passport comprising an information page having at least four joined together layers of paper or its synthetic analogue, such as Teslin, having a total thickness of 540-550 µm, the external surfaces of two outermost layers being white, and a transparent, at least two-layer polycarbonate film (one layer 100-120 µm thick and the other layer 20-25 µm thick) is applied on each external surface. Flexible back of the information page is formed as part of the outermost layer of paper or its synthetic analogue, extending by a length of 7-9 mm beyond the information page along the entire wide part. The flexible back of the information page can be made in another form, in particular, as a ribbon 100-120 µm thick and 20-25 mm wide of polyester fabric with polymer coating, the ribbon being partially disposed along the entire wide side of the information page between two adjacent layers of paper or its synthetic analogue, where the length of the ribbon that extends beyond the information page is 7-9 mm, and the information page is provided with a chip bearing the passport owner's biometric data, located in the information page between two internal layers of paper or its synthetic analogue (RU 57206U1, 10.10.2006).

Disadvantages of the document include insufficient counterfeit protection of the information page, in particular the passport owner's photograph and the information page surface, as well as the lack of mechanical strength of the back material.

### Summary of the Invention

The object of the invention is to improve counterfeit protection of the information page and enhance mechanical strength of the back material.

The object is accomplished in an identification document - a multilayer article, comprising a cover made from a bookbinding material, paper sheets and a multilayer information page consisting of at least four joined together polymer layers, which include transparent or light opaque internal layers and transparent external layers, at least one of the layers, preferably an external one, is sensitive to laser light and has a flexible back, a free end of which is folded, together with the cover and paper sheets, in one fold and joined by stitching along the fold line, said information page is provided with a chip comprising the passport owner's data and positioned between two internal layers; general information is applied by graphic art method on external surfaces of the internal layers of the information page; the owner's personal data and a machine-readable line are applied by a laser engraving method to one side of the information page, and a laser perforation of an individual number is made in the paper sheets of the document and in the cover, wherein a multilayer security element comprising a polymer, highly reflective, metallized film, on which variable identification information is applied, is introduced onto the sealed surface of at least one internal layer of the identification page under the external transparent polymer layer, and a transparent foil with holographic images is applied on the external surface of the information page on at least one side thereof.

In an embodiment of the identification document at least layer of the multilayer security element is a colored lacquer layer.

Preferably the metallized layer of the multi-layer security element is disposed between two transparent polymer films, and at least one layer of the multilayer security element is made of a material, which is irreversibly broken at the attempt to destroy the structure of the information page, and an adhesive layer is applied to at least one surface of the multilayer security element.

Preferably the multilayer security element has a thickness of 5 to 40 µm and shaped edges.

Preferably the multilayer security element includes fluorescent, magnetic, electrically conductive materials or a combination thereof.

Preferably the transparent foil has a positioned image. Preferably the flexible back of the information page is a ribbon made from metallized polyester fabric having a thickness of 100-120 µm and a width of 15-20 mm, one side of the ribbon being fixed along the wide side of the information page between two adjacent polymer layers and extends beyond the information page by a length of 7-12 mm.

Preferably a local drawing is applied by an optically variable ink on the external surface of the internal layer of the information page under the transparent polymer layer, at least on one side.

Preferably, the identification information on the multilayer security element is formed by partial laser demetallization in a reflective layer.

Preferably a drawing is applied on the information page under the multilayer security element, and the identification information is screened so that a positive image is seen when it is viewed in reflected light at a certain angle, preferably equal to the angle of light incidence from a source having an angular dimension sufficient to completely overlap the multilayer security element by the projected image of the source, while at different viewing conditions and lightning directions the drawing formed on the information page, or the identification information and the drawing on the information page coordinated and complementary relative to each other is seen.

### Brief Description of the Drawings

FIG. 1 shows a cross section of an information page.
FIG. 2 is a front side of the information page.
FIG. 3 is a reverse side of the information page.

### Best Embodiment of the Invention

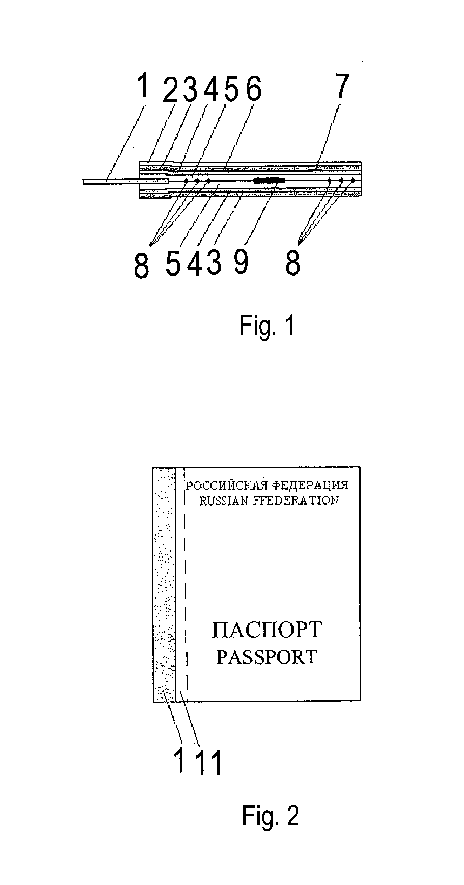

Information page (Figure 1, 2) includes a back 1, a foil 2 with holographic images, two external layers 3 of transparent polymer, such as polycarbonate, two internal layers 4 of white opaque polymer with general information applied by offset printing, and two internal layers 5 of white opaque polymer. A multilayer security element 6 made of metallized film with a duplicate photograph is disposed on the external surface of the layer 4. Local drawing 7 is applied by color-variable ink on the external surface of the layer 4. Antenna 8 and microchip 9 with the passport owner's data are disposed between layers 5.

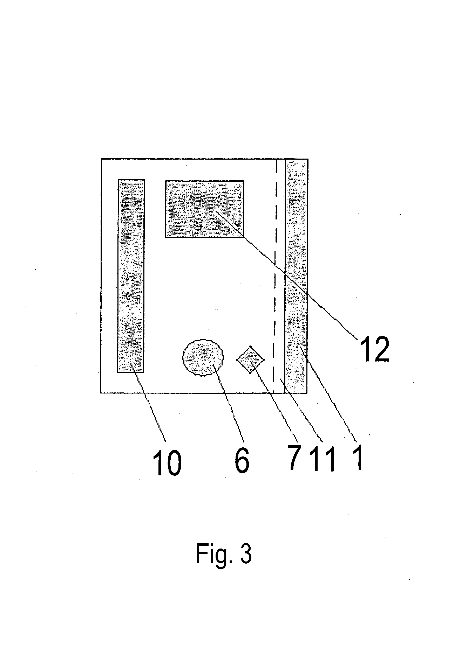

Reverse side of the information page (Figure 3) comprises an area 10 for applying a machine readable line, an area 11 for gluing the back to the page and a photograph 12.

The present invention will be illustrated by an example of its implementation.

A multilayer security element comprises at least one highly reflective opaque layer consisting of a pure metal, such as aluminum, and/or metal compounds and/or alloys, disposed between two transparent polymer films, and identification information is formed by partial laser demetallization of this layer. A drawing is applied on the information page under the multilayer security element at least on one side of the internal layers; the identification information is formed so that a positive image of the identification information is seen when it is viewed in reflected light at a certain angle, preferably at the angle equal to the angle of light incidence from a source having an angular dimension sufficient to completely overlap the multilayer security element by the projected image of the source, while at different viewing conditions and lightning directions the drawing formed on the information page is seen.

Basic owner's personal data (main photo, text information, and signature) and a machine-readable line are entered in the passport's information page by exposing one or more layers of the information page to laser light, which results in darkening (blackening) of the polymer layers. Identification information is applied on the multilayer security element, which is based on the metallized polymer film, by exposing the metallized layers to laser light so that no darkening occurs in laser-sensitive polymer layers of the information page in places of laser exposure, for example, through using the exposure to a lower power laser light. In places of metallized layers exposed to laser light, metals and/or their compounds undergo qualitative changes, which are accompanied by changes in optical properties of the metallized layer.

Basic data and identification information can be applied on the multilayer security element in succession, using a single laser beam with treatment parameters varied in course of application, or simultaneously, using several laser beams.

### Industrial Applicability

The invention can be used in the manufacture of identification documents, such as passports and identity cards. Availability of additional identification information in the document, such as a duplicate photo, a protective transparent foil with holographic images, a metallized fabric back and a local drawing made by an optically variable ink, ensures a more reliable counterfeit protection, and allows the regulatory authorities to verify the document authenticity and the identity of the bearer in the bearer's presence without special technical means.

## Claims

1. An identification document comprising a cover made from a bookbinding material, paper sheets and a multilayer information page consisting of at least four joined together polymer layers, including transparent or light opaque internal layers and transparent external layers, wherein at least one of the layers, preferably an external one, is sensitive to laser light and has a flexible back, a free end of which is folded, together with the cover and paper sheets, in one fold and joined by stitching along the fold line; the information page is provided with a chip bearing the passport owner's data and positioned between two internal layers; general information is applied by graphic art method on external surfaces of the internal layers of the information page; the owner's personal data and a machine-readable line are applied by a laser engraving method to one side of the information page, and a laser perforation of an individual number is made in the paper sheets of the document and in the cover, **characterized in that** a multilayer security element comprising a polymer, highly reflective, metallized film, on which variable identification information is applied, is introduced onto the sealed surface of at least one internal layer of the information page under the external transparent polymer layer, and a transparent foil with holographic images is applied to the external surface of the information page on at least one side thereof.

2. An identification document according to claim 1, wherein at least one layer of the multilayer security element is a colored lacquer layer.

3. An identification document according to claim 1, wherein the metallized layer of the multi-layer security element is disposed between two transparent polymer films.

4. An identification document according to claim 1, wherein at least one layer of the multilayer security element is made of a material, which is irreversibly broken at the attempt to destroy the structure of the information page.

5. An identification document according to claim 1, wherein an adhesive layer is applied to at least one surface of the multilayer security element.

6. An identification document according to claim 1, wherein the multi-layer security element has shaped edges.

7. An identification document according to claim 1, wherein the multilayer security element includes fluorescent, magnetic, electrically conductive materials or a combination thereof.

8. An identification document according to claim 1, wherein the multilayer security element has a thickness of 5 to 40 µm.

9. An identification document according to claim 1, wherein the transparent foil has a positioned image.

10. An identification document according to claim 1, wherein that the flexible back of the information page is a ribbon made from metallized polyester fabric having a thickness of 100-120 µm and a width of 15-20 mm, one side of the ribbon being fixed along the wide side of the information page between two adjacent polymer layers and extends beyond the information page by a length of 7-12 mm.

11. An identification document according to claim 1, wherein a local drawing is applied by an optically variable ink on the external surface of the internal layer of the information page under the transparent polymer layer at least on one side.

12. An identification document according to any one of claims 1 to 11, wherein the identification information on the multilayer security element is formed by partial laser demetallization.

13. An identification document according to claim 12, wherein a drawing is applied on the information page under the multilayer security element, and the identification information is screened so that a positive image is seen when it is viewed in reflected light at a certain angle, preferably equal to the angle of light incidence from a source having an angular dimension sufficient to completely overlap the multilayer security element by the projected image of the source, while at different viewing conditions and lightning directions the drawing formed on the information page is seen.

14. An identification document according to claim 12, wherein the identification information and the drawing on the information page are coordinated and complementary relative to each other.
